(19) Europäisches Patentamt
European Patent Office
Office européen des brevets

(11) **EP 3 063 468 B1**

(12) **FASCICULE DE BREVET EUROPEEN**

(45) Date de publication et mention
de la délivrance du brevet:
**27.12.2017 Bulletin 2017/52**

(21) Numéro de dépôt: **14790586.3**

(22) Date de dépôt: **28.10.2014**

(51) Int Cl.:
*F21V 8/00* *(2006.01)*     *G02B 27/01* *(2006.01)*

(86) Numéro de dépôt international:
**PCT/EP2014/073136**

(87) Numéro de publication internationale:
**WO 2015/063097 (07.05.2015 Gazette 2015/18)**

(54) **GUIDE OPTIQUE ADAPTÉ POUR CRÉER DEUX EMPREINTES LUMINEUSES**

OPTISCHER LEITER ZUR ERZEUGUNG ZWEI LEUCHTENDER PRÄGUNGEN

OPTICAL GUIDE SUITABLE FOR CREATING TWO LUMINOUS IMPRINTS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.10.2013 FR 1360532**

(43) Date de publication de la demande:
**07.09.2016 Bulletin 2016/36**

(73) Titulaire: **Optinvent**
**35700 Rennes (FR)**

(72) Inventeurs:
• **SARAYEDDINE, Khaled**
**F-35700 Rennes (FR)**
• **HUGEL, Xavier**
**F-35700 Rennes (FR)**
• **BENOIT, Pascal**
**F-35700 Rennes (FR)**

(74) Mandataire: **Le Guen-Maillet**
**5, place de Newquay**
**BP 70250**
**35802 Dinard Cedex (FR)**

(56) Documents cités:
WO-A1-2012/136470     US-A1- 2007 064 310
US-A1- 2010 002 991     US-A1- 2012 176 682
US-A1- 2012 200 831     US-A1- 2013 276 960
US-B1- 7 784 954

**Description**

La présente invention concerne un guide optique comportant une zone d'injection destinée à injecter dans le guide optique un signal lumineux et une zone d'extraction destinée à fournir le signal lumineux après transport par le guide optique.

Typiquement, un guide optique comporte une zone de guidage dans laquelle le signal lumineux est transporté par réflexions internes depuis une zone d'injection jusqu'à une zone d'extraction. Le cas le plus courant est celui d'un guide sous forme d'une lame au sein de laquelle le signal lumineux se réfléchit successivement par réflexions totales internes. La distance entre les faces externes du guide optique sur lesquelles se réfléchit le signal lumineux à l'intérieur du guide optique depuis la zone d'injection jusqu'à la zone d'extraction est appelée *épaisseur* du guide optique.

L'image, ou le signal lumineux, à transporter est injectée dans le guide optique grâce à un dispositif d'injection. L'image est constituée d'un faisceau lumineux issu d'une source pouvant être de type LCoS (« *Liquid Crystal on Silicon* » en anglais), LCD (« *Liquid Cristal Display* » en anglais) ou OLED (« *Organic Light-Emitting Diode* » en anglais). Un système optique à base de lentilles, et éventuellement de miroirs, permet de projeter cette image sous forme d'un faisceau collimaté, qui est ensuite introduit dans le guide optique par la zone d'injection.

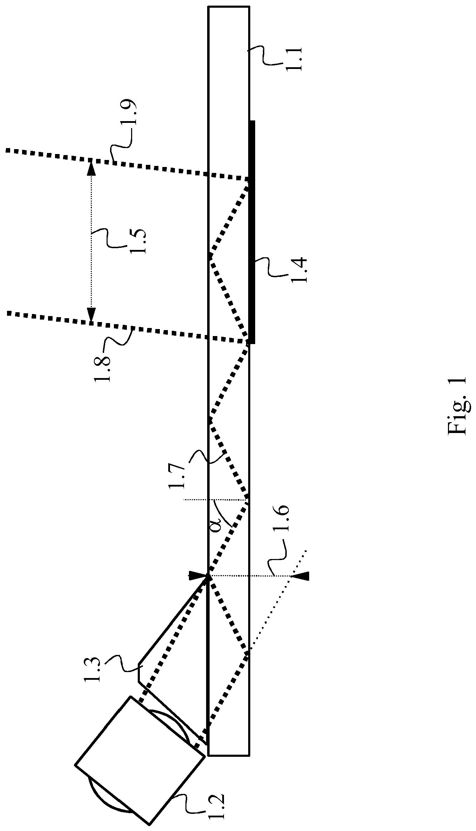

Un exemple de réalisation connu de l'état de la technique est illustré schématiquement par la Fig. 1. Le guide optique comporte un élément de guidage optique 1.1, une source lumineuse (non représentée) adaptée pour fournir une image, un système optique 1.2 à base de lentilles permettant de projeter cette image sous forme d'un faisceau lumineux collimaté, un prisme d'injection 1.3 permettant d'injecter ledit faisceau lumineux dans l'élément de guidage optique 1.1 via une zone d'injection. Le guide optique comporte en outre un dispositif d'extraction 1.4 permettant de fournir l'image transportée par le faisceau lumineux, par exemple à l'oeil d'un utilisateur.

Pour un cahier des charges optique donné, *i.e.* champ et boîte à oeil 1.5 fixés, il découle une certaine épaisseur de l'élément de guidage 1.1, et donc une certaine taille de pupille 1.6 du guide optique. En d'autres termes, la taille de la zone d'injection, et donc dudit système optique à base de lentilles, est ainsi dépendante de l'épaisseur de l'élément de guidage utilisé, qui elle-même est dépendante de la taille de la zone d'extraction et de la résolution désirée, et donc l'encombrement du dispositif d'injection l'est aussi. Réduire l'épaisseur de l'élément de guidage 1.1 permettrait de réduire les dimensions dudit système optique à base de lentilles, mais au détriment de la taille de la boîte à oeil 1.5, délimitée par les rayons 1.8 et 1.9 sur la Fig. 1.

Le document US2010/0002991 divulgue un guide optique utilisant un séparateur de polarisation et une lame à retard pour augmenter la taille du faisceau de sortie. Il est souhaitable de fournir une solution qui permette, pour une taille de boîte à oeil donnée, de réduire l'encombrement du dispositif d'injection, c'est-à-dire de réduire la taille de la zone d'injection.

Il est notamment souhaitable de fournir une solution qui permette que la luminance perçue dans le signal lumineux fourni via la zone d'extraction soit uniforme.

Il est notamment souhaitable de fournir une solution qui soit simple à mettre en oeuvre et à faible coût.

L'invention concerne un guide optique comportant au moins un élément de guidage adapté pour permettre par réflexions totales internes de transporter une image sous forme d'un faisceau lumineux collimaté depuis une zone d'injection jusqu'à une zone d'extraction où est monté un dispositif d'extraction de l'image. Le guide optique comporte une lame à retard et un séparateur de polarisation, le séparateur de polarisation étant placé entre l'élément de guidage et le dispositif d'extraction. Le guide optique est tel que chaque rayon dudit faisceau lumineux collimaté frappant une première fois le séparateur de polarisation se sépare en deux parties, une première partie étant transmise au dispositif d'extraction afin de définir une première empreinte lumineuse et une seconde partie étant réfléchie par le séparateur de polarisation, ladite seconde partie continuant à être guidée par l'élément de guidage et, ce faisant, traversant deux fois la lame à retard avant de frapper le séparateur de polarisation afin de définir une seconde empreinte lumineuse. Ainsi, pour une taille de boîte à oeil donnée, grâce à la mise en oeuvre de deux empreintes lumineuses, la taille de la zone d'injection est réduite. En conséquence, l'encombrement d'un dispositif d'injection permettant d'injecter le faisceau lumineux collimaté est aussi réduit. Le guide optique comporte deux éléments de guidage, la lame à retard est placée en sandwich entre les deux éléments de guidage, et le séparateur de polarisation est placé en sandwich entre une face externe de l'ensemble formé par lesdits éléments de guidage et le dispositif d'extraction. Ainsi, la fabrication du guide optique est simplifiée en évitant d'effectuer deux laminages l'un sur l'autre. De plus, le guide optique a une meilleure tenue en cas de choc par un projectile.

Selon un mode de réalisation particulier, le dispositif d'extraction est constitué d'une lame dont la face externe comporte un ensemble de microstructures réfléchissantes formées en surface, lesdites microstructures étant constituées de prismes ayant un angle permettant la sortie du faisceau lumineux collimaté du guide optique. Ainsi, la fabrication du dispositif d'extraction est simple.

Selon un mode de réalisation particulier, le dispositif d'extraction est constitué d'une première partie comportant un ensemble de microstructures semi-réfléchissantes formées en surface, lesdites microstructures étant constituées de prismes ayant un angle permettant la sortie du faisceau lumineux collimaté du guide optique, et d'une seconde partie comportant en surface des microstructures de forme complémentaire à celles de la première partie, une couche de colle assemblant les première et seconde parties de telle sorte que toute microstructure de la première partie est séparée de sa microstructure complémentaire de la seconde partie par un milieu transparent d'épaisseur substantiellement constante. Ainsi, la fabrication du dispositif d'extraction est simple et la vision à travers le guide optique est améliorée.

Selon un mode de réalisation particulier, le guide optique comporte un renfort mécanique par rattrapage d'une différence entre l'épaisseur du guide optique dans une zone où le faisceau lumineux collimaté est propagé par réflexions totales internes et l'épaisseur du guide optique au niveau de la zone d'extraction, de telle sorte que ledit renfort mécanique ne modifie pas lesdites réflexions totales internes. Ainsi, la tenue mécanique du guide optique est améliorée de manière simple.

Selon un mode de réalisation particulier, le séparateur de polarisation est mis en oeuvre par traitement interférentiel sous forme de dépôt sous vide d'une pluralité de couches de matériaux différents à indices différents, de telle sorte que la transmissivité pour la polarisation *p* soit totale, que la réflectivité pour la polarisation *p* soit nulle, que la transmissivité pour la polarisation *s* soit partielle et que la réflectivité pour la polarisation *s* soit également partielle, ou inversement. Ainsi, un meilleur effet de vision à travers (« *see-through* » en anglais) est obtenu.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :

- la Fig. 1 illustre schématiquement un premier guide optique, connu de l'état de la technique ;
- la Fig. 2 illustre schématiquement une portion d'un second guide optique, selon un mode de réalisation non couvert par les revendications ;
- la Fig. 3 illustre schématiquement un agencement de dispositif d'extraction de guide optique, pouvant être mis en oeuvre dans le cadre de la présente invention ;
- la Fig. 4 illustre schématiquement une portion d'un troisième guide optique, selon un mode de réalisation de la présente invention ;
- la Fig. 5 illustre schématiquement une portion d'un quatrième guide optique, selon un mode de réalisation non couvert par les revendications ; et
- la Fig. 6 illustre schématiquement un agencement de renforcement mécanique du guide optique, pouvant être mis en oeuvre dans le cadre de la présente invention.

L'invention concerne un guide optique comportant au moins un élément de guidage optique adapté pour permettre par réflexions totales internes de transporter une image sous forme d'un faisceau lumineux collimaté depuis une zone d'injection jusqu'à une zone d'extraction où est monté un dispositif d'extraction de l'image. Pour permettre de réduire les dimensions de la zone d'injection et par voie de conséquence l'encombrement d'un dispositif d'injection du faisceau lumineux collimaté dans l'élément de guidage optique, il est proposé que le guide optique comporte une lame à retard et un séparateur de polarisation, ledit séparateur de polarisation étant placé entre l'élément de guidage et le dispositif d'extraction. En outre, il est proposé que le guide optique soit tel que chaque rayon du faisceau lumineux collimaté frappant une première fois le séparateur de polarisation se sépare en deux parties, une première partie étant transmise au dispositif d'extraction afin de définir une première empreinte lumineuse et une seconde partie étant réfléchie par le séparateur de polarisation, ladite seconde partie continuant à être guidée par l'élément de guidage et, ce faisant, traversant deux fois la lame à retard avant de frapper le séparateur de polarisation afin de définir une seconde empreinte lumineuse. La mise en oeuvre de ces deux empreintes lumineuses permet d'augmenter les dimensions de la boîte à oeil, c'est-à-dire de doubler la taille de la boîte à oeil comparativement à une mise en oeuvre d'une seule empreinte lumineuse, pour une taille donnée de zone d'injection. En renversant la relation, pour une taille donnée de boîte à oeil, la mise en oeuvre de ces deux empreintes lumineuses permet de diviser par deux la taille de la zone d'injection et donc de réduire l'encombrement du dispositif d'injection du faisceau lumineux collimaté dans l'élément de guidage optique.

Dans la suite de la description, chaque élément de guidage optique est une lame à faces parallèles permettant de transporter le faisceau lumineux collimaté par réflexions totales internes. D'autres éléments de guidage que ceux détaillés peuvent être mis en oeuvre dans le cadre de l'invention, notamment des éléments de guidage comportant la zone d'injection sur une desdites faces et la zone d'extraction sur l'autre desdites faces, ainsi que des éléments de guidage à faces courbes comme l'est un pare-brise de véhicule.

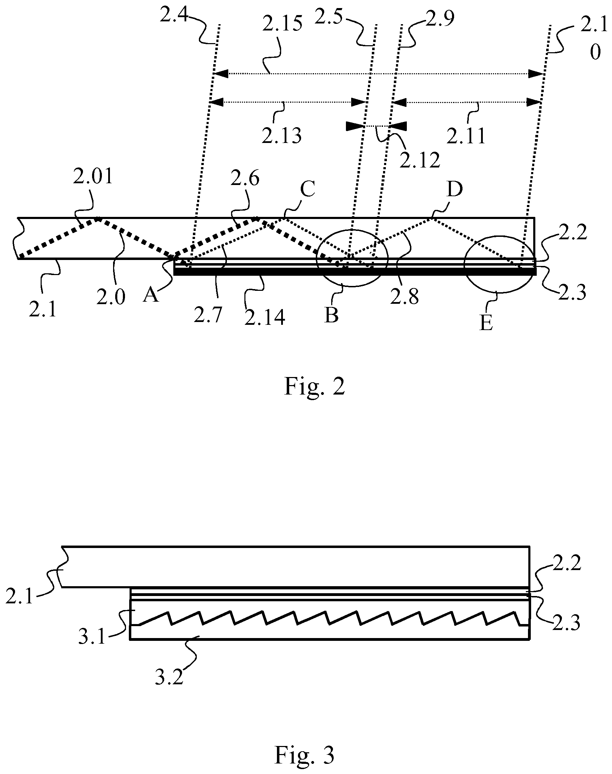

La Fig. 2 illustre schématiquement une portion d'un second guide optique selon une vue en coupe dans la direction de propagation d'un faisceau lumineux transporté par le second guide optique.

Le second guide optique comporte un élément de guidage optique 2.1, une source lumineuse (non représentée) adaptée pour fournir une image, un système optique (non représenté) à base de lentilles permettant de projeter cette image sous forme d'un faisceau lumineux collimaté, un prisme ou autre élément d'injection (non représenté) permettant d'injecter ledit faisceau lumineux dans l'élément de guidage optique 2.1 via une zone d'injection.

Le second guide optique comporte en outre un dispositif d'extraction 2.14 définissant une zone d'extraction du faisceau lumineux où le faisceau lumineux est extrait du second guide optique afin d'être fourni par exemple à l'oeil d'un utilisateur. Une boîte à oeil 2.15 est ainsi définie permettant à l'utilisateur de voir l'image transportée par le faisceau lumineux et ainsi extraite du second guide optique. Le dispositif d'extraction 2.14 peut être réalisé de diverses manières, par exemple en ayant recours à un hologramme, ou à une structure diffractive, ou à une structure à base de réflecteurs parallèles partiellement réfléchissant insérés au coeur d'un substrat. Dans un mode de réalisation préféré, le dispositif d'extraction 2.14 comporte des microstructures de surface, comme décrit en relation avec la Fig. 3.

Le second guide optique comporte en outre une lame à retard 2.2 et un séparateur de polarisation PBS (« *Polarization Beam Splitter* » en anglais) 2.3. L'agencement du second guide optique est tel que la lame à retard 2.2 et le séparateur de polarisation PBS 2.3 sont pris en sandwich entre l'élément de guidage optique 2.1 et le dispositif d'extraction 2.14. La lame à retard 2.2 est placée contre une face externe de l'élément de guidage optique 2.1, et le séparateur de polarisation PBS 2.3 est placé contre la lame à retard 2.2 et contre le dispositif d'extraction 2.14. La lame à retard 2.2 peut être réalisée sous forme de film à laminer, ou par dépôt ou autre, et le séparateur de polarisation PBS 2.3 peut également être réalisé sous forme de film à laminer ou par dépôt sous vide.

Le retard engendré par la lame à retard 2.2 dans l'élément de guidage optique 2.1 est adapté de telle sorte que tout rayon dudit faisceau lumineux qui a initialement une polarisation de type *p* ait, en traversant la lame à retard 2.2, une polarisation à moitié de type *s* et à moitié de type *p*. Notons $R(\alpha)$ le déphasage engendré par la lame à retard 2.2 en fonction de l'angle d'incidence $\alpha$ du faisceau lumineux. Une lame à retard de type quart d'onde a typiquement une valeur de déphasage $R(\alpha)$ égale à $\pi/2$ et une lame à retard de type demi-onde a typiquement une valeur de déphasage $R(\alpha)$ égale à $\pi$.

Pour simplifier le raisonnement, prenons une orientation $\psi$ de polarisation transmise par le séparateur de polarisation PBS 2.3 égale à 0 degré, de façon à ce que la polarisation transmise par le séparateur de polarisation PBS 2.3 soit de type *p* et que la polarisation réfléchie par le séparateur de polarisation PBS 2.3 soit de type *s*. Supposons également que l'orientation $\varphi$ de l'axe rapide de la lame à retard 2.2 soit différente de 0 degré.

Considérons, à titre illustratif, que tout rayon du faisceau lumineux injecté a initialement une polarisation de type *p* (c'est-à-dire dans le plan défini par tout rayon injecté, tel qu'un rayon 2.01 représenté sur la Fig. 2, et le rayon résultant de sa réflexion totale interne dans l'élément de guidage optique 2.1, tel qu'un rayon résultant 2.0 représenté sur la Fig. 2). Lorsque le rayon 2.0 arrive en un point A représentant le début de la zone d'extraction (dans le sens de propagation du faisceau lumineux injecté dans l'élément de guidage optique 2.1), le rayon 2.0 traverse la lame à retard 2.2 et a ainsi une polarisation partiellement de type *p* et partiellement de type *s* au moment de frapper le séparateur de polarisation PBS 2.3. La partie du rayon 2.0 ayant une polarisation de type *s* est alors réfléchie par le séparateur de polarisation PBS 2.3, retraverse la lame à retard 2.2 et subit donc un changement de polarisation, devenant partiellement de type *s* et partiellement de type *p*. Cela constitue un rayon 2.7, tel que représenté sur la Fig. 2. La partie ayant une polarisation de type *p* du rayon 2.0 traverse le séparateur de polarisation PBS 2.3 et vient frapper le dispositif d'extraction 2.14 afin d'être extraite du guide optique. Cela constitue un rayon 2.4, tel que représenté sur la Fig. 2.

Le rayon 2.7 vient se réfléchir en un point C sur la face de l'élément de guidage optique 2.1 qui est opposée à la face de l'élément de guidage optique 2.1 où est monté le dispositif d'extraction 2.14. Au niveau d'une zone B, le rayon 2.7 traverse la lame à retard 2.2 et a donc alors une polarisation partiellement de type *s* et partiellement de type *p*. La partie du rayon 2.7 ayant une polarisation de type *p* passe alors à travers le séparateur de polarisation PBS 2.3 et vient frapper le dispositif d'extraction 2.14 afin d'être extraite du guide optique. Cela constitue un rayon 2.9, tel que représenté sur la Fig. 2.

Un rayon du faisceau lumineux injecté venant frapper la face externe de l'élément de guidage optique 2.1 juste avant le point A subit une réflexion interne totale et forme ainsi un rayon 2.6, tel que représenté sur la Fig. 2. Lorsque le rayon 2.6 arrive dans la zone B, le rayon 2.6 traverse la lame à retard 2.2 et subit ainsi un changement de polarisation, cette polarisation étant partiellement de type *p* et partiellement de type *s* au moment de frapper le séparateur de polarisation PBS 2.3. La partie du rayon 2.6 ayant une polarisation de type *s* est alors réfléchie par le séparateur de polarisation PBS 2.3, retraverse la lame à retard 2.2 et a donc alors une polarisation partiellement de type *s* et partiellement de type *p*. Cela constitue un rayon 2.8, tel que représenté sur la Fig. 2. La partie ayant une polarisation de type *p* du rayon 2.6 après traversée de la lame à retard 2.2 traverse le séparateur de polarisation PBS 2.3 et vient frapper le dispositif d'extraction 2.14 afin d'être extraite du guide optique. Cela constitue un rayon 2.5, tel que représenté sur la Fig. 2.

Le rayon 2.8 vient se réfléchir en un point D sur la face de l'élément de guidage optique 2.1 qui est opposée à la face de l'élément de guidage optique 2.1 où est monté le dispositif d'extraction 2.14. Au niveau d'une zone E, le rayon 2.8 traverse la lame à retard 2.2 et a donc alors une polarisation partiellement de type *s* et partiellement de type *p*. La partie du rayon 2.8 ayant une polarisation de type *p* passe donc à travers le séparateur de polarisation PBS 2.3 et vient frapper le dispositif d'extraction 2.14 afin d'être extraite du guide optique. Cela constitue un rayon 2.10, tel que représenté sur la Fig. 2.

L'agencement du second guide optique permet d'obtenir une boîte à oeil 2.15 constituée de deux empreintes lumineuses 2.11 et 2.13 délimitées respectivement sur la Fig. 2 par les rayons 2.4 et 2.5 d'une part, et les rayons 2.9 et 2.10 d'autre part. Il peut exister entre les deux empreintes lumineuses 2.11 et 2.13 une zone 2.12 qui ne soit pas atteinte par le faisceau lumineux extrait du guide optique. Au regard des dimensions de la boîte à oeil 2.15 et de l'épaisseur de la lame à retard 2.2 et du séparateur de polarisation PBS 2.3, la présence de cette zone 2.12 n'a cependant qu'une incidence minime et négligeable sur l'uniformité de la répartition d'énergie dans la boîte à oeil 2.15.

Les réflexions totales internes, notamment aux points C et D, entraînent un déphasage qui dépend de l'angle d'incidence $\alpha$ du faisceau collimaté dans l'élément de guidage optique 2.1. Un tel déphasage peut entraîner une chute d'énergie au niveau de l'empreinte lumineuse 2.13 par modification de la répartition des polarisations de types *p* et *s*. Pour uniformiser la répartition d'énergie entre les deux empreintes lumineuses 2.11 et 2.13, il est souhaitable que l'équation suivante soit vérifiée :

$$|e(2.4)|^2 = |e(2.9)|^2$$

où *e* (2.4) représente, de manière vectorielle, l'état de polarisation du rayon 2.4 et *e*(2.9) représente, de manière vectorielle, l'état de polarisation du rayon 2.9.

L'état de polarisation *e*(2.4) du rayon 2.4 peut être exprimé de la façon suivante :

$$e(2.4) = P1 \circ F1 \circ e(2.0)$$

où : e(2.0) représente, de manière vectorielle, l'état de polarisation du rayon 2.0 ; *P*1 représente la fonction de transfert de l'axe passant de polarisation du séparateur de polarisation PBS 2.3 ; *F*1 représente la fonction de transfert de la lame à retard 2.2 dans un premier sens de traversée (du haut vers le bas sur la représentation de la Fig. 2) ; et « ∘ » représente un opérateur de composition de fonctions de transfert.

L'état de polarisation *e*(2.9) du rayon 2.9 peut être exprimé de la façon suivante :

$$e(2.9) = P1 \circ F1 \circ (TIR \circ F1') \circ P2 \circ F1 \circ e(2.0)$$

où : *P*2 représente la fonction de transfert de l'axe réfléchissant de polarisation du séparateur de polarisation PBS 2.3, *F*1' représente la fonction de transfert de la lame à retard 2.2 dans un second sens de traversée (du bas vers le haut sur la représentation de la Fig. 2) et *TIR* représente la fonction de transfert d'une réflexion interne totale.

En considérant que la polarisation du rayon 2.0 est de type *p* et donc que l'état de polarisation *e*(2.0) du rayon 2.0 est exprimé de la façon suivante :

$$e(2.0) = \begin{bmatrix} 1 \\ 0 \end{bmatrix}$$

il est alors possible d'uniformiser la répartition d'énergie entre les deux empreintes lumineuses 2.11 et 2.13 en définissant l'orientation $\varphi$ de l'axe rapide de la lame à retard 2.2 à 68 degrés, l'orientation $\psi$ de la polarisation transmise par le séparateur de polarisation PBS 2.3 à 0 degrés et le déphasage R($\alpha$) engendré par la lame à retard 2.2 à 180 degrés. On a alors :

$$|e(2.4)|^2 = |e(2.9)|^2 \approx 0{,}45$$

On peut noter que le système d'équations à résoudre pour paramétrer le guide optique pour uniformiser la répartition d'énergie entre les deux empreintes lumineuses 2.11 et 2.13 est simple, ce qui fait que le second guide optique est simple de réalisation.

La Fig. 3 illustre schématiquement un agencement de dispositif d'extraction de guide optique, pouvant être mis en oeuvre dans le cadre de la présente invention.

Le dispositif d'extraction comporte une première partie 3.2 et une seconde partie 3.3. La première partie 3.1 est sous la forme d'une lame dont une face plane est placée contre le séparateur de polarisation PBS 2.3 et dont la face opposée comporte un ensemble de microstructures réfléchissantes formées en surface. Ces microstructures sont constituées de prismes ayant un angle permettant la sortie du faisceau lumineux du guide optique. Les microstructures sont préférentiellement placées de telles sorte qu'elles ne soient pas séparées par des espaces interstitiels, c'est-à-dire que les microstructures se succèdent les unes aux autres. Les microstructures sont semi-réfléchissantes, afin de permettre d'obtenir un effet de vision à travers (« *see-through* » en anglais).

La seconde partie 3.2 comporte en surface des microstructures de forme complémentaire à celles de la première partie 3.1. Une couche de colle assemble les première 3.1 et seconde 3.2 parties de telle sorte que toute microstructure de la première partie 3.1 est séparée de sa microstructure complémentaire de la seconde partie 3.2 par un milieu transparent d'épaisseur substantiellement constante. Cet agencement permet d'obtenir un équivalent d'une lame à faces parallèles pour ce qui est de la vision à travers, qui s'en trouve ainsi améliorée. On pourra se référer à la demande internationale de brevet publiée sous la référence WO 2012/136470 A1 pour ce qui est de la mise en forme de telles microstructures complémentaires.

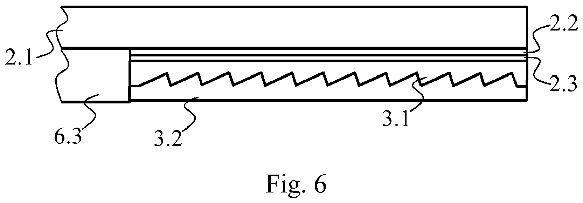

Un renforcement mécanique de guide optique peut être ajouté au second guide optique, tel que décrit en relation avec la Fig. 6.

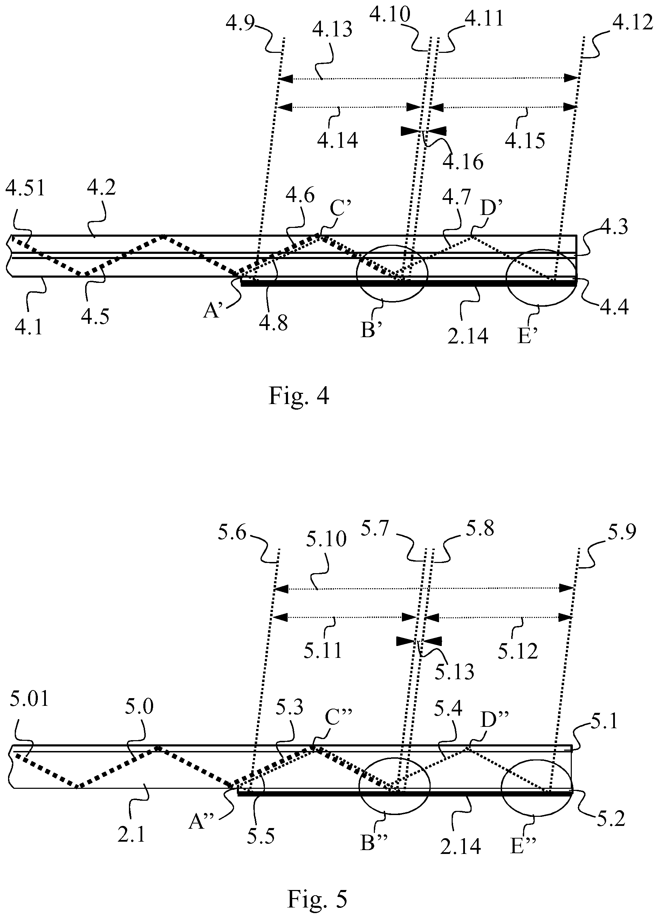

La Fig. 4 illustre schématiquement une portion d'un troisième guide optique, dans un mode de réalisation de la présente invention, selon une vue en coupe dans la direction de propagation d'un faisceau lumineux transporté par le troisième guide optique.

Le troisième guide optique comporte un premier élément de guidage optique 4.1, un second élément de guidage optique 4.2, une source lumineuse (non représentée) adaptée pour fournir une image, un système optique (non représenté) à base de lentilles permettant de projeter cette image sous forme d'un faisceau lumineux collimaté, un prisme ou autre élément d'injection (non représenté) permettant d'injecter ledit faisceau lumineux dans le second élément de guidage optique 4.2 via une zone d'injection.

Le troisième guide optique comporte en outre le dispositif d'extraction 2.14 déjà décrit en relation avec la Fig. 2. Une boîte à oeil 4.13 est ainsi définie permettant à l'utilisateur de voir l'image injectée dans le troisième guide optique.

Le troisième guide optique comporte en outre une lame à retard 4.3 et un séparateur de polarisation PBS 4.4. L'agencement du troisième guide optique est tel que la lame à retard 4.3 est prise en sandwich entre le premier élément de guidage 4.1 et le second élément de guidage optique 4.2. Les réflexions internes totales du faisceau lumineux injecté dans le guide optique s'opèrent entre une face externe du premier élément de guidage optique 4.1 et une face externe du second élément de guidage optique 4.2. Le séparateur de polarisation PBS 4.4 est pris en sandwich entre le premier élément de guidage 4.1 et le dispositif d'extraction 2.14. Le séparateur de polarisation PBS 4.4 est donc placé contre la face externe du premier élément de guidage optique 4.1 et contre le dispositif d'extraction 2.14. La lame à retard 4.3 peut être réalisée sous forme de film à laminer, ou par dépôt ou autre, et le séparateur de polarisation PBS 4.4 peut également être réalisé sous forme de film à laminer ou par dépôt sous vide. Un avantage de cet agencement est que l'on évite de laminer deux films l'un sur l'autre. De plus, le troisième guide optique est rigidifié à la manière d'un pare-brise, de telle sorte que, en cas de choc par un projectile, les premier 4.1 et second 4.2 éléments de guidage optique restent maintenus l'un à l'autre. Les risques de projection d'éclats de verre dans l'oeil de l'utilisateur sont ainsi réduits.

Considérons, à titre illustratif, que tout rayon du faisceau lumineux injecté a initialement une polarisation de type *p* (le plan défini par tout rayon injecté, tel qu'un rayon 4.51 représenté sur la Fig. 4, et le rayon résultant de sa réflexion totale interne dans les éléments de guidage optique, tel qu'un rayon résultant 4.5 représenté sur la Fig. 4). Après injection dans le second élément de guidage optique 4.2, tout rayon du faisceau lumineux injecté traverse un nombre impair de fois la lame à retard 4.3. Lorsque le rayon 4.5 arrive en un point A' représentant le début de la zone d'extraction (dans le sens de propagation du faisceau lumineux injecté dans le second élément de guidage optique 4.2), le rayon 4.5 a ainsi une polarisation partiellement de type *p* et partiellement de type *s* au moment de frapper le séparateur de polarisation PBS 4.4. La partie du rayon 4.5 ayant une polarisation de type *s* est réfléchie par le séparateur de polarisation PBS 4.4, retraverse la lame à retard 4.3 et a donc alors une polarisation partiellement de type *s* et partiellement de type *p*. Cela constitue un rayon 4.8, tel que représenté sur la Fig. 4. La partie ayant une polarisation de type *p* du rayon 4.5 arrivant au point A' traverse le séparateur de polarisation PBS 4.4 et vient frapper le dispositif d'extraction 2.14 afin d'être extraite du guide optique. Cela constitue un rayon 4.9, tel que représenté sur la Fig. 4.

Le rayon 4.8 traverse la lame à retard 4.3 et vient se réfléchir en un point C' sur la face externe du second élément de guidage 4.2. Le rayon 4.8 après réflexion retraverse la lame à retard 4.3. La partie du rayon 4.8 après retraversée de la lame à retard 4.3 ayant une polarisation de type *p* passe donc à travers le séparateur de polarisation PBS 4.4 et vient frapper le dispositif d'extraction 2.14 afin d'être extraite du guide optique. Cela constitue un rayon 4.11, tel que représenté sur la Fig. 4.

Un rayon du faisceau lumineux injecté venant frapper la face externe du premier élément de guidage optique 4.1 juste avant le point A' subit une réflexion interne totale et constitue ainsi un rayon 4.6, tel que représenté sur la Fig. 4. Le rayon 4.6 passe à travers la lame à retard 4.3, est ensuite réfléchi en un point C' sur la face externe du second élément de guidage optique 4.2 et repasse à travers la lame à retard 4.3. Lorsque le rayon 4.6 arrive dans une zone B', le rayon 4.6 a une polarisation partiellement de type *p* et partiellement de type *s*. La partie du rayon 4.6 venant frapper le séparateur de polarisation PBS 4.4 ayant une polarisation de type *s* est réfléchie par le séparateur de polarisation PBS 4.4, et traverse à nouveau la lame à retard 4.3. Cela constitue un rayon 4.7, tel que représenté sur la Fig. 4. La partie ayant une polarisation de type *p* du rayon 4.6 traverse le séparateur de polarisation PBS 4.4 et vient frapper le dispositif d'extraction 2.14 afin d'être extraite du guide optique. Cela constitue un rayon 4.10, tel que représenté sur la Fig. 4.

Après passage via la lame de retard 4.3, le rayon 4.7 vient se réfléchir en un point D' sur la face externe du second élément de guidage optique 4.2. Après réflexion, le rayon 4.7 retraverse la lame à retard 4.4. Arrivée dans une zone E', la partie du rayon 4.7 ayant une polarisation de type $p$ passe donc à travers le séparateur de polarisation PBS 4.4 et vient frapper le dispositif d'extraction 2.14 afin d'être extraite du guide optique. Cela constitue un rayon 4.12, tel que représenté sur la Fig. 4.

L'agencement du troisième guide optique permet d'obtenir une boîte à oeil 4.13 constituée de deux empreintes lumineuses 4.14 et 4.15 délimitées respectivement sur la Fig. 4 par les rayons 4.9 et 4.10 d'une part, et les rayons 4.11 et 4.12 d'autre part. Comme pour le second guide optique de la Fig. 2, il peut exister entre les deux empreintes lumineuses 4.14 et 4.15 une zone 4.16 qui ne soit pas atteinte par le faisceau lumineux extrait du guide optique.

Les réflexions totales internes, notamment aux points C' et D', entraînent un déphasage qui dépend de l'angle d'incidence $\alpha$ du faisceau collimaté dans le second élément de guidage optique 4.2. Un tel déphasage peut entraîner plus particulièrement une chute d'énergie au niveau de l'empreinte lumineuse 4.15 par modification de la répartition des polarisations de types $p$ et $s$. Pour uniformiser la répartition d'énergie entre les deux empreintes lumineuses 4.14 et 4.15, il est souhaitable que l'équation suivante soit vérifiée :

$$|e(4.9)|^2 = |e(4.10)|^2 = |e(4.11)|^2 = |e(4.12)|^2$$

où : $e(4.9)$ représente, de manière vectorielle, l'état de polarisation du rayon 4.9 ; $e(4.10)$ représente, de manière vectorielle, l'état de polarisation du rayon 4.10 ; $e(4.11)$ représente, de manière vectorielle, l'état de polarisation du rayon 4.11 ; et $e(4.12)$ représente, de manière vectorielle, l'état de polarisation du rayon 4.12.

L'état de polarisation $e(4.9)$ du rayon 4.9 peut être exprimé de la façon suivante :

$$e(4.9) = P3 \circ F2 \circ (TIR \circ F2' \circ TIR \circ F2)^n \circ e(4.5)$$

où : $e(4.5)$ représente, de manière vectorielle, l'état de polarisation du rayon 4.5 tel qu'injecté dans le second élément de guidage optique 4.2 ; $2n + 1$ définit le nombre de fois que le rayon 4.5 traverse la lame à retard 4.3 avant de parvenir au point A' ; $P3$ représente la fonction de transfert de l'axe passant de polarisation du séparateur de polarisation PBS 4.4 ; $F2$ représente la fonction de transfert de la lame à retard 4.3 dans un premier sens de traversée (du haut vers le bas dans la représentation de la Fig. 4) et $F2'$ représente la fonction de transfert de la lame à retard 4.3 dans un second sens de traversée (du bas vers le haut dans la représentation de la Fig. 4).

L'état de polarisation $e(4.10)$ du rayon 4.10 peut être exprimé de la façon suivante :

$$e(4.10) = P3 \circ F2 \circ (TIR \circ F2' \circ TIR \circ F2)^{n+1} \circ e(4.5)$$

L'état de polarisation $e(4.11)$ du rayon 4.11 peut être exprimé de la façon suivante :

$$e(4.11) = P3 \circ (F2 \circ TIR \circ F2') \circ P4 \circ F2 \circ (TIR \circ F2' \circ TIR \circ F2)^n \circ e(4.5)$$

où : P4 représente la fonction de transfert de l'axe réfléchissant de polarisation du séparateur de polarisation PBS 4.4.

L'état de polarisation $e(4.12)$ du rayon 4.12 peut être exprimé de la façon suivante :

$$e(4.12) = P3 \circ (F2 \circ TIR \circ F2') \circ P4 \circ F2 \circ (TIR \circ F2' \circ TIR \circ F2)^{n+1} \circ e(4.5)$$

En considérant que la polarisation du rayon 2.0 est de type $p$ et donc que l'état de polarisation $e(4.5)$ du rayon 4.5 est exprimé de la façon suivante :

$$e(4.5) = \begin{bmatrix} 1 \\ 0 \end{bmatrix}$$

il est alors possible d'uniformiser la répartition d'énergie entre les deux empreintes lumineuses 4.14 et 4.15 en définissant, pour n=1, l'orientation $\varphi$ de l'axe rapide de la lame à retard 4.3 à 68 degrés, l'orientation $\psi$ de la polarisation transmise par le séparateur de polarisation PBS 4.4 à 0 degrés et le déphasage R($\alpha$) engendré par la lame à retard 4.3 à 180 degrés. On a alors :

$$|e(4.9)|^2 = |e(4.10)|^2 = |e(4.11)|^2 = |e(4.12)|^2 \approx 0,45$$

La Fig. 5 illustre schématiquement une portion d'un quatrième guide optique selon une vue en coupe dans la direction de propagation d'un faisceau lumineux transporté par le quatrième guide optique.

Le quatrième guide optique comporte l'élément de guidage optique 2.1 déjà décrit en relation avec la Fig. 2, une source lumineuse (non représentée) adaptée pour fournir une image, un système optique (non représenté) à base de lentilles permettant de projeter cette image sous forme d'un faisceau lumineux collimaté, un prisme ou autre élément d'injection (non représenté) permettant d'injecter ledit faisceau lumineux dans l'élément de guidage optique 2.1 via une zone d'injection.

Le quatrième guide optique comporte en outre le dispositif d'extraction 2.14 déjà décrit en relation avec la Fig. 2. Une boîte à oeil 5.10 est ainsi définie permettant à l'utilisateur de voir l'image injectée dans le quatrième guide optique.

Le quatrième guide optique comporte en outre une lame à retard 5.1 et un séparateur de polarisation PBS 5.2. L'agencement du quatrième guide optique est tel que la lame à retard 5.1 est placée sur la face externe de l'élément de guidage 2.1 qui est opposée à la face externe sur laquelle est monté le dispositif d'extraction 2.14. Les réflexions internes totales du faisceau lumineux injecté dans le guide optique s'opèrent entre une face externe de l'élément de guidage optique 2.1 et une face externe de la lame à retard 5.1. Le séparateur de polarisation PBS 5.2 est pris en sandwich entre l'élément de guidage 2.1 et le dispositif d'extraction 2.14. Le séparateur de polarisation PBS 5.2 est donc placé contre la face externe de l'élément de guidage 2.1 et contre le dispositif d'extraction 2.14. La lame à retard 5.1 peut être mise en oeuvre sous forme de film à laminer, ou par dépôt ou autre, et le séparateur de polarisation PBS 5.2 peut également être mis en oeuvre sous forme de film à laminer ou par dépôt sous vide. Un avantage de cet agencement est que l'on évite de laminer deux films l'un sur l'autre.

Considérons, à titre illustratif, que tout rayon du faisceau lumineux injecté a initialement une polarisation de type $p$ (le plan défini par tout rayon injecté, tel qu'un rayon 5.01 représenté sur la Fig. 5, et le rayon résultant de sa réflexion totale interne dans l'élément de guidage optique 2.1, tel qu'un rayon résultant 5.0 représenté sur la Fig. 5). Après injection dans l'élément de guidage 2.1, tout rayon du faisceau injecté traverse un nombre impair de fois la lame à retard 5.1. Lorsque le rayon 5.0 arrive en un point A" représentant le début de la zone d'extraction (dans le sens de propagation du faisceau lumineux injecté dans l'élément de guidage optique 2.1), le rayon 5.0 a ainsi une polarisation partiellement de type $p$ et partiellement de type $s$ au moment de frapper le séparateur de polarisation PBS 5.2. La partie du rayon 5.0 ayant une polarisation de type $s$ est réfléchie par le séparateur de polarisation PBS 5.2. Cela constitue un rayon 5.5, tel que représenté sur la Fig. 5. Le rayon 5.5 traverse la lame à retard 5.1, est réfléchi sur la face externe de la lame à retard 5.1 et a donc, en revenant vers l'intérieur de l'élément de guidage 2.1, une polarisation partiellement de type $s$ et partiellement de type $p$.

La partie ayant une polarisation de type $p$ du rayon 5.0 arrivant au point A" traverse le séparateur de polarisation PBS 5.2 et vient frapper le dispositif d'extraction 2.14 afin d'être extraite du guide optique. Cela constitue un rayon 5.6, tel que représenté sur la Fig. 5.

Lorsque le rayon 5.5 revient vers le séparateur de polarisation PBS 5.2 en une zone B", la partie du rayon 5.5 ayant une polarisation de type $p$ passe donc à travers le séparateur de polarisation PBS 5.2 et vient frapper le dispositif d'extraction 2.14 afin d'être extraite du guide optique. Cela constitue un rayon 5.8, tel que représenté sur la Fig. 5.

Un rayon du faisceau lumineux injecté venant frapper la face externe de l'élément de guidage optique 2.1 juste avant le point A" subit une réflexion interne totale et constitue ainsi un rayon 5.3, tel que représenté sur la Fig. 5. Le rayon 5.3 traverse la lame à retard 5.1, subit une réflexion interne totale en un point C" sur la face externe de la lame à retard 5.1 et retraverse la lame à retard 5.1. Lorsque le rayon 5.3 arrive alors dans une zone B", le rayon 5.3 a une polarisation partiellement de type $p$ et partiellement de type $s$. La partie du rayon 5.3 venant frapper le séparateur de polarisation PBS 5.2 ayant une polarisation de type $s$ est réfléchie par le séparateur de polarisation PBS 5.2. Cela constitue un rayon 5.4, tel que représenté sur la Fig. 5. La partie ayant une polarisation de type $p$ du rayon 5.3 traverse le séparateur de polarisation PBS 5.3 et vient frapper le dispositif d'extraction 2.14 afin d'être extraite du guide optique. Cela constitue un rayon 5.7, tel que représenté sur la Fig. 5.

Le rayon 5.4 traverse la lame de retard 5.1 et vient se réfléchir en un point D" sur la face externe de la lame à retard 5.1 et retraverse la lame à retard 5.1. Arrivée dans une zone E", la partie du rayon 5.4 ayant une polarisation de type $p$ passe donc à travers le séparateur de polarisation PBS 5.2 et vient frapper le dispositif d'extraction 2.14 afin d'être extraite du guide optique. Cela constitue un rayon 5.9, tel que représenté sur la Fig. 5.

L'agencement du quatrième guide optique permet d'obtenir une boîte à oeil 5.10 constituée de deux empreintes lumineuses 5.11 et 5.12 délimitées respectivement sur la Fig. 5 par les rayons 5.6 et 5.7 d'une part, et les rayons 5.8 et 5.9 d'autre part. Comme pour le second guide optique de la Fig. 2, il peut exister entre les deux empreintes lumineuses 5.11 et 5.12 une zone 5.13 qui ne soit pas atteinte par le faisceau lumineux éjecté du guide optique.

Les réflexions totales internes, notamment aux points C" et D", entraînent un déphasage qui dépend de l'angle d'incidence $\alpha$ du faisceau collimaté dans l'élément de guidage 2.1. Un tel déphasage peut entraîner plus particulièrement une chute d'énergie au niveau de l'empreinte lumineuse 5.12 par modification de la répartition des polarisations de types $p$ et $s$. Pour uniformiser la répartition d'énergie entre les deux empreintes lumineuses 5.11 et 5.12, il est souhaitable que l'équation suivante soit vérifiée :

$$|e(5.6)|^2 = |e(5.7)|^2 = |e(5.8)|^2 = |e(5.9)|^2$$

où : $e(5.6)$ représente, de manière vectorielle, l'état de polarisation du rayon 5.6 ; $e(5.7)$ représente, de manière vectorielle, l'état de polarisation du rayon 5.7 ; $e(5.8)$ représente, de manière vectorielle, l'état de polarisation du rayon 5.8 ; et $e(5.9)$ représente, de manière vectorielle, l'état de polarisation du rayon 5.9.

L'état de polarisation $e(5.6)$ du rayon 5.6 peut être exprimé de la façon suivante :

$$e(5.6) = P5 \circ F3 \circ (TIR \circ F3' \circ TIR \circ F3)^n \circ e(5.0)$$

où : $e(5.0)$ représente, de manière vectorielle, l'état de polarisation du rayon 5.0 tel qu'injecté dans l'élément de guidage optique 2.1 ; $2n + 1$ définit le nombre de fois que le rayon 5.0 traverse la lame à retard 5.2 avant de parvenir au point A" ; P5 représente la fonction de transfert de l'axe passant de polarisation du séparateur de polarisation PBS 5.3 ; F3 représente la fonction de transfert de la lame à retard 5.2 dans un premier sens de traversée (du bas vers le haut dans la représentation de la Fig. 5) ; et F3' représente la fonction de transfert de la lame à retard 5.2 dans un second sens de traversée (du haut vers le bas dans la représentation de la Fig. 5).

L'état de polarisation $e(5.7)$ du rayon 5.7 peut être exprimé de la façon suivante :

$$e(5.7) = P5 \circ F3 \circ (TIR \circ F3' \circ TIR \circ F3)^{n+1} \circ e(5.0)$$

L'état de polarisation $e(5.8)$ du rayon 5.8 peut être exprimé de la façon suivante :

$$e(5.8) = P5 \circ (F3 \circ TIR \circ F3') \circ P6 \circ F3 \circ (TIR \circ F3' \circ TIR \circ F3)^n \circ e(5.0)$$

où $P6$ représente la fonction de transfert de l'axe réfléchissant de polarisation du séparateur de polarisation PBS 5.3.

L'état de polarisation $e(5.9)$ du rayon 5.9 peut être exprimé de la façon suivante :

$$e(5.9) = P5 \circ (F3 \circ TIR \circ F3') \circ P6 \circ F3 \circ (TIR \circ F3' \circ TIR \circ F3)^{n+1} \circ e(5.0)$$

En considérant que la polarisation du rayon 5.0 est de type $p$ et donc que l'état de polarisation $e(5.0)$ du rayon 5.0 tel qu'injecté dans l'élément de guidage optique 2.1 est exprimé de la façon suivante :

$$e(5.0) = \begin{bmatrix} 1 \\ 0 \end{bmatrix}$$

il est alors possible d'uniformiser la répartition d'énergie entre les deux empreintes lumineuses 5.11 et 5.12 en définissant, pour n=1, l'orientation $\varphi$ de l'axe rapide de la lame à retard 5.2 à 68 degrés, l'orientation $\psi$ de la polarisation transmise par le séparateur de polarisation PBS 5.3 à 0 degrés et le déphasage R($\alpha$) engendré par la lame à retard 5.2 à 180 degrés. On a alors :

$$|e(5.6)|^2 = |e(5.7)|^2 = |e(5.8)|^2 = |e(5.9)|^2 \approx 0{,}45$$

La Fig. 6 illustre schématiquement un agencement de renforcement mécanique de guide optique, pouvant être mis en oeuvre dans le cadre de la présente invention, plus particulièrement lorsque le dispositif d'extraction mis en oeuvre est celui représenté à la Fig. 3.

Pour renforcer mécaniquement le guide optique, il est proposé de rattraper la différence entre l'épaisseur du guide optique dans une zone où le faisceau lumineux collimaté est propagé par réflexions totales internes et l'épaisseur du guide optique au niveau de la zone d'extraction. Dans le cadre de la Fig. 6, le rattrapage d'épaisseur est effectué par rapport à l'ensemble formé par les parties 3.2 et 3.3 formant le dispositif d'extraction déjà décrit en relation avec la Fig. 3. Ce rattrapage de différence d'épaisseur peut être réalisé grâce à une lame transparente collée sur la face externe de l'élément de guidage optique 2.1 sur laquelle est monté le dispositif d'extraction 3.1. La colle utilisée doit être d'indice suffisamment faible comparativement à l'indice du matériau dans lequel est fabriqué l'élément de guidage optique 2.1, de manière à assurer que les réflexions totales internes s'effectuent contre la face externe de l'élément de guidage optique 2.1. Par exemple, une colle ayant une valeur d'indice 1,33 pour un élément de guidage optique ayant une valeur d'indice 1,6 peut être utilisée pour guider des rayons jusqu'à un angle $\alpha$ de 56,2 degrés.

L'agencement proposé pour renforcer mécaniquement le guide optique est tel que ledit renfort mécanique ne modifie pas les réflexions totales internes précédemment décrites.

Les explications du fonctionnement du guide optique ont été détaillées en partant de l'hypothèse que le faisceau lumineux injecté dans le guide optique a une polarisation de type $p$. Les mêmes principes s'appliquent si le faisceau lumineux injecté dans le guide optique a une polarisation de type $s$ ou a une polarisation circulaire. Le contrôle de cette polarisation du faisceau lumineux injecté dans le guide optique peut être naturel, lorsqu'issu d'un imageur de type LCoS ou LCD, ou forcé, par emploi de lames à retard et/ou de polariseurs entre le système d'injection et l'élément de guidage optique concerné. Les mêmes principes s'appliquent aussi si le faisceau lumineux injecté dans le guide optique est dépolarisé, ce qui est le cas avec un imageur de type OLED. L'impact n'est en effet que sur l'état de polarisation du faisceau lumineux injecté, le reste du système d'équations à résoudre étant inchangé.

De plus, les explications du fonctionnement du guide optique ont été détaillées en partant de l'hypothèse que le séparateur de polarisation PBS est sous forme d'un film à laminer présentant un premier axe propre totalement transmissif pour une polarisation P1 (polarisation $p$ dans les modes de réalisation détaillés ci-dessus) et totalement réflectif pour une polarisation orthogonale à la polarisation P1, et un second axe propre, orthogonal au premier axe propre, totalement réflectif pour la polarisation P1 et totalement transmissif pour une polarisation orthogonale à la polarisation P1. Il est possible de réaliser le séparateur de polarisation PBS par traitement interférentiel sous forme de dépôt sous vide d'une pluralité de couches de matériaux différents à indices différents. Cela permet de s'abstraire de l'orientation $\psi$ de la polarisation transmise par le séparateur de polarisation PBS. Il est alors possible de former le séparateur de polarisation PBS de telle sorte que la transmissivité pour la polarisation $p$ soit totale, que la réflectivité pour la polarisation $p$ soit nulle, que la transmissivité pour la polarisation $s$ soit partielle et que la réflectivité pour la polarisation $s$ soit également partielle, ou inversement, c'est-à-dire que la transmissivité pour la polarisation $s$ soit totale, que la réflectivité pour la polarisation $s$ soit nulle, que la transmissivité pour la polarisation $p$ soit partielle et que la réflectivité pour la polarisation $p$ soit également partielle. Cela permet d'augmenter l'efficacité de l'effet de vision à travers.

## Revendications

**1.** Guide optique comportant au moins un élément de guidage (2.1 ; 4.1, 4.2) adapté pour permettre par réflexions totales internes de transporter une image sous forme d'un faisceau lumineux collimaté depuis une zone d'injection jusqu'à une zone d'extraction où est monté un dispositif d'extraction de l'image (2.14), le guide optique comportant une lame à retard (2.2 ; 4.3 ; 5.1) et un séparateur de polarisation (2.3 ; 4.4 ; 5.2), le séparateur de polarisation étant placé entre l'élément de guidage et le dispositif d'extraction, le guide optique étant tel que chaque rayon (2.0 ; 2.6 ; 4.5 ; 4.6 ; 5.0 ; 5.3) dudit faisceau lumineux collimaté frappant une première fois le séparateur de polarisation se sépare en deux parties, une première partie étant transmise au dispositif d'extraction afin de définir une première empreinte lumineuse (2.13; 4.14; 5.11) et une seconde partie étant réfléchie par le séparateur de polarisation, ladite seconde partie continuant à être guidée par l'élément de guidage et, ce faisant, traversant deux fois la lame à retard avant de frapper le séparateur de polarisation afin de définir une seconde empreinte lumineuse (2.11 ; 4.15 ; 5.12), **caractérisé en ce que** le guide optique comporte deux éléments de guidage (4.1 ; 4.2), la lame à retard (4.3) est placée en sandwich entre les deux éléments de guidage, et le séparateur de polarisation (4.4) est placé en sandwich entre une face externe de l'ensemble formé par lesdits éléments de guidage et le dispositif d'extraction.

**2.** Guide optique selon la revendication 1 **caractérisé en ce que** le dispositif d'extraction est constitué d'une lame (3.1) dont la face externe comporte un ensemble de microstructures réfléchissantes formées en surface, lesdites microstructures étant constituées de prismes ayant un angle permettant la sortie du faisceau lumineux collimaté du guide optique.

**3.** Guide optique selon la revendication 1, **caractérisé en ce que** le dispositif d'extraction est constitué d'une première partie (3.2) comportant un ensemble de microstructures semi-réfléchissantes formées en surface, lesdites microstructures étant constituées de prismes ayant un angle permettant la sortie du faisceau lumineux collimaté du guide optique, et d'une seconde partie (3.3) comportant en surface des microstructures de forme complémentaire à celles de la première partie, une couche de colle assemblant les première et seconde parties de telle sorte que toute microstructure de la première partie est séparée de sa microstructure complémentaire de la seconde partie par un milieu transparent d'épaisseur substantiellement constante.

**4.** Guide optique selon l'une quelconque des revendications 1 à 3, **caractérisé en ce que** le guide optique comporte un renfort mécanique (6.1 ; 6.2) par rattrapage d'une différence entre l'épaisseur du guide optique dans une zone où le faisceau lumineux collimaté est propagé par réflexions totales internes et l'épaisseur du guide optique au niveau de la zone d'extraction, de telle sorte que ledit renfort mécanique ne modifie pas lesdites réflexions totales internes.

**5.** Guide optique selon l'une quelconque des revendications 1 à 4, **caractérisé en ce que** le séparateur de polarisation est mis en oeuvre par traitement interférentiel sous forme de dépôt sous vide d'une pluralité de couches de matériaux différents à indices différents, de telle sorte que la transmissivité pour la polarisation *p* soit totale, que la réflectivité pour la polarisation *p* soit nulle, que la transmissivité pour la polarisation *s* soit partielle et que la réflectivité pour la polarisation *s* soit également partielle, ou inversement.

**Patentansprüche**

**1.** Lichtwellenleiter, umfassend mindestens ein Führungselement (2.1; 4.1, 4.2), das geeignet ist, durch innere Totalreflexionen zu ermöglichen, ein Bild in Form eines kollimierten Lichtstrahls von einer Injektionszone zu einer Entnahmezone zu transportieren, wo eine Bildentnahmevorrichtung (2.14) angebracht ist, wobei der Lichtwellenleiter eine Verzögerungsplatte (2.2; 4.3; 5.1) und einen Polarisationsteiler (2.3; 4.4; 5.2) aufweist, wobei der Polarisationsteiler zwischen dem Führungselement und der Entnahmevorrichtung angeordnet ist, wobei der optische Wellenleiter derart ist, dass jeder Strahl (2.0; 2.6; 4.5; 4.6; 5.0; 5.3) des kollimierten Lichtstrahls, der ein erstes Mal auf den Polarisationsteiler trifft, in zwei Teile getrennt wird, wobei ein erster Teil auf die Entnahmevorrichtung übertragen wird, um einen ersten Lichtabdruck (2.13; 4.14; 5.11) zu definieren, und ein zweiter Teil durch den Polarisationsteiler reflektiert wird, wobei der zweite Teil weiterhin durch das Führungselement geführt wird und dadurch die Verzögerungsplatte zweimal durchquert, bevor er auf den Polarisationsteiler trifft, um einen zweiten Lichtabdruck (2.11; 4.15; 5.12) zu definieren, **dadurch gekennzeichnet, dass** der Lichtwellenleiter zwei Führungselemente (4.1; 4.2) aufweist, die Verzögerungsplatte (4.3) sandwichartig zwischen den zwei Führungselementen angeordnet ist und der Polarisationsteiler (4.4) sandwichartig zwischen einer Außenfläche der Anordnung, die aus den Führungselementen und der Entnahmevorrichtung gebildet ist, angeordnet ist.

**2.** Lichtwellenleiter nach Anspruch 1, **dadurch gekennzeichnet, dass** die Entnahmevorrichtung aus einem Plättchen (3.1) gebildet ist, dessen Außenfläche eine Anordnung von reflektierenden Mikrostrukturen aufweist, die auf der Oberfläche gebildet sind, wobei die Mikrostrukturen aus Prismen bestehen, die einen Winkel aufweisen, der das Austreten des kollimierten Lichtstrahls aus dem Lichtwellenleiter ermöglicht.

**3.** Lichtwellenleiter nach Anspruch 1, **dadurch gekennzeichnet, dass** die Entnahmevorrichtung aus einem ersten Teil (3.2), der eine Anordnung von halbreflektierenden Mikrostrukturen aufweist, die auf der Oberfläche gebildet sind, wobei die Mikrostrukturen aus Prismen bestehen, die einen Winkel aufweisen, der das Austreten des kollimierten Lichtstrahls aus dem Lichtwellenleiter ermöglicht, und einem zweiten Teil (3.3) gebildet ist, der auf der Oberfläche Mikrostrukturen von komplementärer Form zu jenen des ersten Teils aufweist, wobei eine Klebstoffschicht den ersten und zweiten Teil derart zusammenfügt, dass die gesamte Mikrostruktur des ersten Teils von ihrer komplementären Mikrostruktur des zweiten Teils durch ein transparentes Medium von im Wesentlichen konstanter Dicke getrennt ist.

**4.** Lichtwellenleiter nach einem der Ansprüche 1 bis 3, **dadurch gekennzeichnet, dass** der Lichtwellenleiter eine mechanische Verstärkung (6.1; 6.2) durch Ausgleichen einer Differenz zwischen der Dicke des Lichtwellenleiters in einer Zone, wo der kollimierte Lichtstrahl durch innere Totalreflexionen verbreitet wird, und der Dicke des Lichtwellenleiters auf Ebene der Entnahmezone derart aufweist, dass die mechanische Verstärkung die inneren Totalreflexionen nicht modifiziert.

**5.** Lichtwellenleiter nach einem der Ansprüche 1 bis 4, **dadurch gekennzeichnet, dass** der Polarisationsteiler durch Interferenzbearbeitung in Form von Vakuumbeschichten von mehreren Schichten unterschiedlicher Materialien mit unterschiedlichen Indizes derart umgesetzt wird, dass die Durchlässigkeit für die Polarisation $p$ vollständig ist, dass das Reflexionsvermögen für die Polarisation $p$ Null ist, dass die Durchlässigkeit für die Polarisation $s$ partiell ist und dass das Reflexionsvermögen für die Polarisation $s$ ebenfalls partiell ist oder umgekehrt.

**Claims**

**1.** Optical guide comprising at least one guiding element (2.1; 4.1, 4.2) adapted for enabling, by total internal reflections, transporting an image in the form of a collimated light beam from an injection zone to an extraction zone where an image extracting device (2.14) is mounted, the optical guide comprising a retardation plate (2.2; 4.3; 5.1) and a polarisation beam splitter (2.3; 4.4; 5.2), the polarisation beam splitter being placed between the guiding element and the extracting device, the optical guide being such that each ray (2.0; 2.6; 4.5; 4.6; 5.0; 5.3) of said collimated light beam striking the first polarisation beam splitter separates into two portions, a first portion being sent to the extracting device so as to define a first light imprint (2.13; 4.14; 5.11) and a second portion being reflected by the polarisation beam splitter, said second portion continuing to be guided by the guiding element and thereby passing twice through the retardation plate before hitting the polarisation beam splitter so as to define a second light imprint (2.11; 4.15; 5.12), **characterised in that** the optical guide comprises two guiding elements (4.1; 4.2), the retardation plate (4.3) is sandwiched between the two guiding elements, and the polarisation beam splitter (4.4) is sandwiched between an outer face of the assembly formed by said guiding elements and the extracting device.

**2.** Optical guide according to claim 1, **characterised in that** the extracting device consists of a plate (3.1), the outer face of which comprises a set of reflective microstructures formed on surface, said microstructures consisting of prisms having an angle enabling the collimated light beam to emerge from the optical guide.

**3.** Optical guide according to claim 1, **characterised in that** the extracting device consists of a first portion (3.2) comprising a set of semi-reflective microstructures formed on surface, said microstructures consisting of prisms having an angle enabling the collimated light beam to emerge from the optical guide, and a second portion (3.3) having on surface microstructures with a shape complementary to those of the first portion, an adhesive layer joining the first and second portions so that any microstructure of the first portion is separated from its complementary microstructure of the second portion by a transparent medium of substantially constant thickness.

**4.** Optical guide according to any one of claims 1 to 3, **characterised in that** the optical guide comprises a mechanical reinforcement (6.1; 6.2) by compensating a difference between the thickness of the optical guide in a zone where the collimated light beam is propagated by total internal reflections and the thickness of the optical guide at the extraction zone, so that said mechanical reinforcement does not change said total internal reflections.

**5.** Optical guide according to any one of claims 1 to 4, **characterised in that** the polarisation beam splitter is implemented by interferential treatment in the form of vacuum deposition of a plurality of layers of different materials with different indices, so that the transmissivity for the $p$-polarisation is total, the reflectivity for the $p$-polarisation is null, the transmissivity for the $s$-polarisation is partial and the reflectivity for the $s$-polarisation is also partial, or vice-versa.

Fig. 1

Fig. 2

Fig. 3

Fig. 4

Fig. 5

Fig. 6

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20100002991 A
- WO 2012136470 A1